# EUROPEAN PATENT APPLICATION

(11) **EP 2 284 582 A1**
(43) Date of publication of application: **16.02.2011**
(21) Application number: 09742651.4
(22) Date of filing: 01.04.2009
(51) Int. Cl.: G02B 6/00

(54) **OPTICAL FIBER WIRING APPARATUS**

(30) Priority: 07.05.2008 JP 2008121120
(71) Applicant: Nitta Corporation, Osaka-shi, Osaka 556-0022 (JP)
(72) Inventor: YOSHIDA, Takashi, Yamatokoriyama-shi Nara 639-1085 (JP)
(74) Representative: Intès, Didier Gérard André
(86) International application number: PCT/JP2009/056812
(87) International publication number: WO 2009/136526

(57) **Abstract**

An optical fiber wiring apparatus provides an optical fiber (100) on a sheet 101 having a surface on which an adhesive layer (101a) is formed, and includes a bobbin (21) on which the optical fiber (100) is wound, a guide member (22), and a wiring roller (24). The guide member (22) has a groove portion (23) which guides the optical fiber (100) drawn from the bobbin (21) to the surface of the adhesive layer (101a). The wiring roller (24) is rotatable about an axis which is in parallel to the sheet (101) and orthogonal to the length of the groove portion (23). The wiring roller (24) presses the optical fiber (100) guided by the groove portion (23) onto the adhesive layer (101a).

## Description

### TECHNICAL FIELD

The present invention relates to an optical fiber wiring apparatus which provides an optical fiber on a sheet or a substrate on which an adhesive layer is formed.

### BACKGROUND ART

Known technologies associated with optical fibers are, for example, an optical fiber wiring substrate on which a wiring pattern is formed by an optical fiber and an optical fiber pressure sensor (see e.g. Patent Document 1) which detects a pressure onto an expanded material by detecting scattered light applied to the expanded material. For the production of such an optical fiber wiring substrate and an optical fiber pressure sensor, typically used is an optical fiber wiring apparatus which provides an optical fiber on a substrate or an adhesive sheet coated with an adhesive.

An example of the wiring apparatus above is disclosed by Patent Document 2. The optical fiber wiring apparatus of Patent Document 2 is provided with a rotating wheel which is rotatable about an axis in parallel to a substrate and has an outer circumferential surface on a part of which an optical fiber is wound. This rotating wheel presses an optical fiber onto the surface of a substrate covered with an adhesive so as to adhere the optical fiber onto the substrate. On the outer circumferential surface of the rotating wheel, a groove is circumferentially formed to retain an optical fiber.

In the meanwhile, an optical fiber wiring apparatus of Patent Document 3 includes a wiring head having a holding groove which holds an optical fiber in a bended state and a guide groove which guides the optical fiber to the holding groove. The optical fiber is held at a bended state by the holding groove and pressed onto the substrate by the bending stress.

### [Patent Documents]

[Patent Document 1] Published Japanese Translation of a PICT International Application 2002-507279
[Patent Document 2] Japanese Patent No. 2735464
[Patent Document 3] Japanese Unexamined Patent Publication No. 2001-59910

### DISCLOSURE OF THE INVENTION

The apparatus of Patent Document 2, however, is disadvantageous in that, as the outer circumferential surface of the rotating wheel has the groove, the edges of the groove are protruded. When an optical fiber is provided on a wiring pattern having a bended part, the protrusion contacts a part of the optical fiber having already adhered to the substrate as the rotating wheel changes the course in accordance with the wiring pattern, with the result that the optical fiber deviates from the intended position and becomes easily detachable.

In the meanwhile, the apparatus of Patent Document 3 is disadvantageous in that, the curvature radius of the holding groove must be larger than the curvature with which the optical fiber its broken, in order to prevent the breaking of the optical fiber, and hence the holding groove is required to have enough length. For this reason, the contact length between the optical fiber and the grooves of the wiring head (i.e. holding groove and guide groove) is relatively long, with the result that the friction resistance between the optical fiber and the grooves is high. As a result, the optical fiber may be broken because of a high tension thereof. Moreover, since the optical fiber is fixed to the substrate while having a high tension, the optical characteristics of the optical fiber may be significantly changed by physical changes in the substrate or the adhesive.

In consideration of the above, an objective of the present invention is to provide an optical fiber wiring apparatus in which an optical fiber is not excessively tensioned while the deviation of a part of the optical fiber already adhering to the adhesive layer does not occur.

An optical fiber wiring apparatus according to claim 1, which is for providing an optical fiber on a sheet or a substrate having a surface on which an adhesive layer is formed, includes: a bobbin on which the optical fiber is wound; a guide member having a groove portion by which the optical fiber drawn from the bobbin is guided to a surface of the adhesive layer; and a wiring roller which is rotatable about an axis being in parallel to the sheet or the substrate and orthogonal to the length of the groove portion and presses the optical fiber guided by the groove portion onto the adhesive layer.

According to this arrangement, the optical fiber guided to the surface of the adhesive layer by the groove portion of the guide member is pressed onto and adheres to the surface of the adhesive layer by the wiring roller, substantially at the position to which the optical fiber is guided. Since the guide member guiding the optical fiber and the wiring roller pressing the optical fiber onto the adhesive layer are different components, it is unnecessary to form a groove on the wiring roller to retain the optical fiber. When the wiring roller has such a groove, the edge portions protruding portions) on the respective sides of the groove may contact a part of the optical fiber having already been provided on the adhesive layer so as to cause the optical fiber to be deviated from the intended position. In this regard, since the wiring roller of the present invention does not have a groove, the optical fiber is not deviated from the intended position. Furthermore, in the present invention the optical fiber is not pressed onto the adhesive layer by a bending stress, the contact length between the optical fiber and the groove portion is relatively short. In addition to this, the optical fiber substantially line-contacts the wiring roller. This prevents the friction resistance among the optical fiber, the groove portion, and the wiring roller from being excessively high, and hence the optical fiber does not have an excessive tension.

According to claim 2, the optical fiber wiring apparatus according to claim 1 further includes a rotation mechanism which rotates, about an axis orthogonal to the sheet or the substrate, a wiring unit including the bobbin, the guide member, and the wiring roller. In this arrangement, when a wiring pattern having a bended part is formed, the optical fiber is not twisted because, with the help of the rotation mechanism, the wiring unit performs the wiring while rotating such that the wiring direction matches the tangential direction of the wiring pattern.

According to claim 3, the optical fiber wiring apparatus according to claim 2 is further arranged so that an end portion of the groove portion on the wiring roller side is on the axis of the rotation mechanism. Since the axis of the rotation mechanism functions as a reference position of the trajectory of the wiring unit, it is possible to relatively precisely perform the wiring by providing, on that axis, the wiring roller side end portion of the groove portion.

According to claim 4, the optical fiber wiring apparatus of claim 3 further includes an assist roller which is provided in proximity to the end portion, presses the optical fiber onto the adhesive layer, and has an outer diameter shorter than an outer diameter of the wiring roller. According to this arrangement, it is possible to reduce a deviation between the position to which the optical fiber is guided to the surface of the adhesive layer by the groove portion and the position where the optical fiber is pressed onto the adhesive layer. In short, the wiring is further precisely performed.

According to claim 5, the optical fiber wiring apparatus of claim 2 further includes an assist roller which is provided in proximity to an end portion of the groove portion on the wiring roller side and is on the axis of the rotation mechanism, presses the optical fiber onto the adhesive layer, and has an outer diameter shorter than an outer diameter of the wiring roller. Since the axis of the rotation mechanism functions as a reference position of the trajectory of the wiring unit, it is possible to relatively precisely perform the wiring by providing the assist roller on that axis.

According to claim 6, the optical fiber wiring apparatus of any one of claims 1 to 5 is further arranged so that the bobbin is rotatable by a tension of the optical fiber which tension is generated when the optical fiber is pressed onto the adhesive layer by the wiring roller. This arrangement makes it possible to stably supply the optical fiber to the wiring roller. Furthermore, cost reduction is achieved because a motor or the like is not required to rotate the bobbin.

According to claim 7, the optical fiber wiring apparatus of any one of claims 1 to 6 further includes: a tension roller on which the optical fiber is wound; and an elastic member which biases the tension roller toward the optical fiber. According to this arrangement, when the tension of the optical fiber is changed, the change in the tension is absorbed as the tension roller moves to the position where the biasing force of the elastic member is balanced against the tension of the optical fiber. This makes it possible to keep the tension of the optical fiber more or less constant.

According to claim 8, the optical fiber wiring apparatus of any one of claims 1 to 7 further includes an elastic member which biases the wiring roller toward the optical fiber. According to this arrangement, a friction force is generated between the optical fiber and the wiring roller as the wiring unit moves in the wiring direction, with the result that the wiring roller certainly rotates without sliding on the optical fiber and presses the optical fiber onto the adhesive layer. Furthermore, also in cases where a part of the optical fiber is wired to traverse another part of the optical fiber which has already adhered to the adhesive layer, the wiring roller can certainly presses that part of the optical fiber onto the adhesive layer.

### BRIEF DESCRIPTION OF THE DRAWINGS

Fig. 1 is a perspective view of an optical fiber wiring apparatus according to an embodiment of the present invention. Fig. 2 (a) is a profile of a wiring unit, whereas Fig. 2 (b) is a perspective view of the wiring unit.
Fig. 3 is a profile of a guide member and a wiring roller.
Fig. 4 is a perspective view of the guide member.

### BEST MODE FOR CARRYING OUT THE INVENTION

The following will describe an embodiment of the present invention. The present embodiment is an exemplary case that an optical fiber 100 is provided by an optical fiber wiring apparatus 1 on a sheet 101 on which an adhesive layer 101a has been formed.

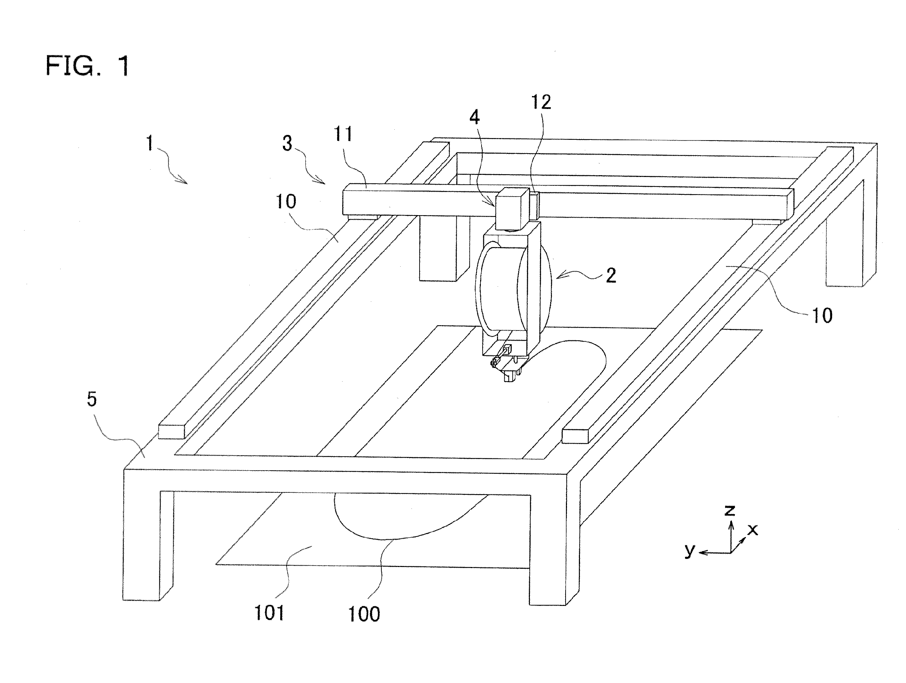

As shown in Fig. 1, the optical fiber wiring apparatus 1 includes a wiring unit 2, a horizontal movement mechanism 3 which moves the wiring unit 2 in directions in parallel to the sheet 101 (i.e. the XY directions in Fig. 1), a rotation mechanism 4 which rotates the wiring unit 2 about an axis (Z axis in Fig. 1) orthogonal to the sheet 101, a holding frame 5, and an unillustrated control unit which controls the horizontal movement mechanism 3 and the rotation mechanism 4. The optical fiber 100 of the present embodiment is, for example, about 250 micrometers in diameter.

The horizontal movement mechanism 3 includes two X-axis frames 10 extending in parallel to the X axis and provided on the holding frame 5, a Y-axis arm 11 provided on the two X-axis frames 10 and extending in parallel to the Y axis, and a carriage 12 attached to the Y-axis arm 11. The Y-axis arm 11 is arranged to be movable in the X axis directions by an unillustrated rail on the X-axis frame 10. The carriage 12 is also arranged to be movable in the Y axis directions by an unillustrated rail on the Y-axis arm 11.

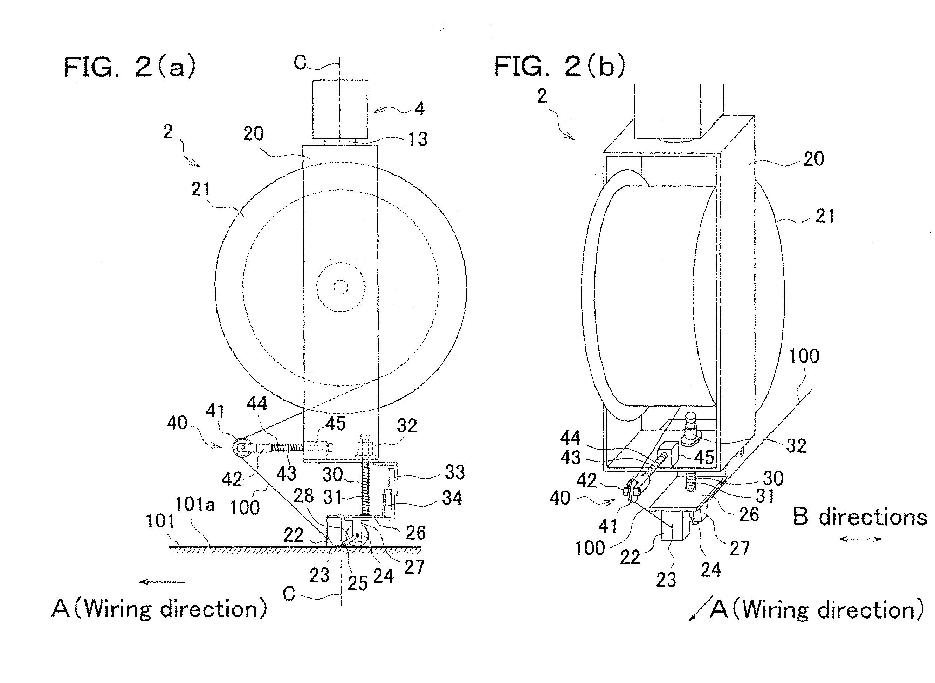

The rotation mechanism 4 is attached to the carriage 12. As shown in Fig. 2(a), This rotation mechanism 4 includes an axial component 13 extending in the Z axis directions and an unillustrated motor rotating the axial component 13. The lower end portion of the axial component 13 is fixed to a later-described unit body 20 of wiring unit 2.

As shown in Fig. 2, the unit 2 includes a unit body 20, a bobbin 21 on which an optical fiber 100 is wound, a guide member 22 which guides the optical fiber 100 drawn from the bobbin 21 to the adhesive layer 101a, a wiring roller 24 which presses the optical fiber 100 onto the adhesive layer 101a, a coil spring (elastic member) 30 which biases the wiring roller 24 toward the adhesive layer 101a, and a tension adjusting unit 40 which adjusts the tension of the optical fiber 100.

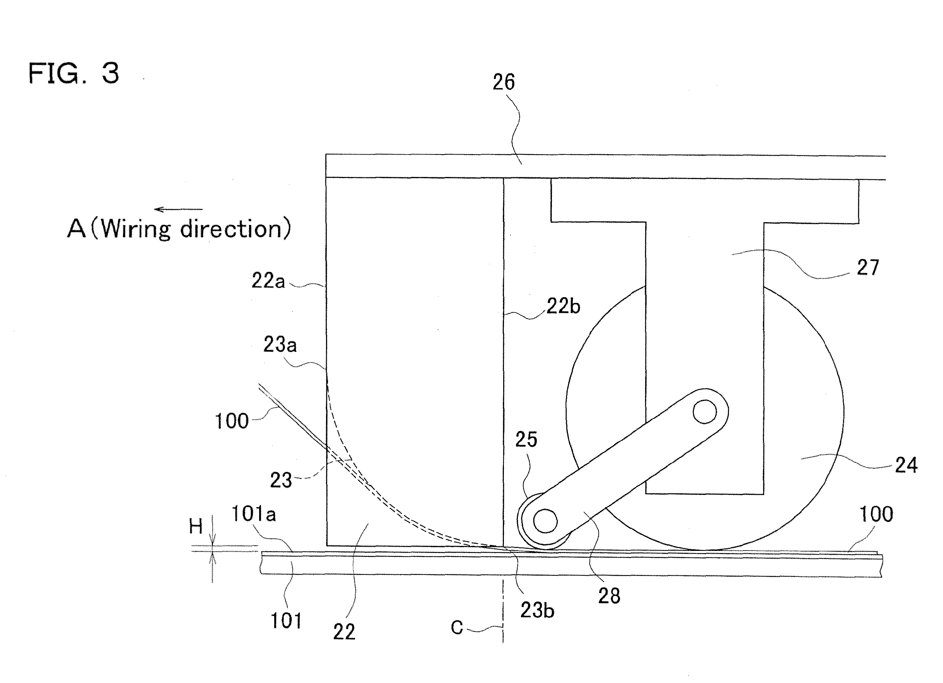

The unit body 20 is a short rectangular tube. On the top plate of the unit body 20, the lower end portion of the axial component 13 is fixed. This arrangement allows the wiring unit 2 to be movable in a wiring direction (i.e. in the direction of the arrow A in Fig. 2 and Fig. 3) by the horizontal movement mechanism 3 and the rotation mechanism 4.

To the unit body 20 is attached to the bobbin 21 on which the optical fiber 100 is wound. The bobbin 21 is supported by the unit body 20 to be rotatable about an axis which is in parallel to the sheet 101 and orthogonal to the arrow A (i.e. the axis which is in the B directions in Fig. 2(b)). The optical fiber 100 drawn from the bobbin 21 is supplied to the guide member 22 and the wiring roller 24 via a later-described tension roller 41 of the tension adjusting unit 40. The bobbin 21 is provided to be detachable to the unit body 20 and is replaced with a new bobbin 21 when a remaining amount of the wound optical fiber 100 becomes small. The bobbin 21 is arranged to be rotatable by a tension generated when the optical fiber 100 is pressed onto the adhesive layer 101a by the wiring roller 24. In other words, the bobbin 21 has a resistance (rotating torque) with which the bobbin 21 rotates when the optical fiber 100 has a predetermined level of tension but does not rotate under its own inertia. This arrangement makes it possible to stably supply the optical fiber 100 to the wiring roller 24. Moreover, cost reduction is achieved because a motor or the like is not required to rotate the bobbin 21.

To the lower part of the unit body 20, a fixture plate 26 is connected via a below-described linear rail 33 and a slider 34. On the lower surface of this fixture plate 26, a supporting member 27 and a guide member 22 are fixed to be aligned in the direction of the arrows A.

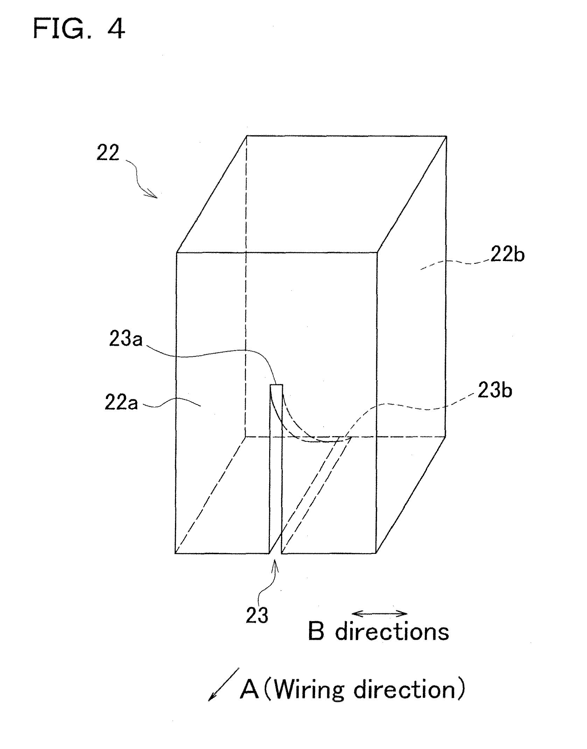

As shown in Fig. 2(b) and Fig. 4, the guide member 22 has a rectangular parallelepiped shape and is attached to the fixture plate 26 such that the side surfaces are orthogonal to the directions of the arrows A and B. This guide member 22 is arranged to be detachable to the fixture plate 26, and is suitably replaced with a different one in accordance with the diameter and/or number of optical fibers to be used. The guide member 22 is replaced also when it is worn out. As shown in Fig. 3, among the side surfaces of the guide member 22 orthogonal to the direction of the arrow A, the side surface on the wiring roller 24 side is a back surface 22b, whereas the other side surface is a front surface 22a. The distance H between the lower end of the guide member 22 and the surface of the adhesive layer 101a is twice or more longer than the diameter of the optical fiber 100. This arrangement prevents the lower end of the guide member 22 from being caught by a part of the optical fiber 100 having already been provided on the adhesive layer 101a. The back surface 22b of the guide member 22 is provided on the axis C of the axial component 13.

In addition to the above, as shown in Fig. 4, at the central part of the guide member 22 in the B direction, a groove portion 23 is formed to extend from the central part of the front surface 22a in the vertical directions to the lower end of the back surface 22b. The groove portion 23 is provided for guiding the optical fiber 100 drawn from the bobbin 21 to the surface of the adhesive layer 101a. The groove portion 23 extends along a circle centered on an axis in parallel to the B direction. In other words, the bottom surface of the groove portion 23 is arc-shaped. The groove portion 23 is arranged to be shallower toward the both end portions. The end portion of the groove portion 23 on the front surface 22a side is an inlet-side end portion 23a, whereas the end portion of the groove portion 23 on the back surface 22b side is an outlet-side end portion 23b. Since the back surface 22b is on the axis C of the axial component 13 as described above, the outlet-side end portion 23b is also on the axis C of the axial component 13. The optical fiber 100 is not required to contact the entirety of the bottom surface of the groove portion 23, as long as it contacts the bottom portion around the outlet-side end portion 23b. In short, the contact length between the optical fiber 100 and the groove portion 23 is short.

The guide member 22 is either made of a material (e.g. polytetrafluoroethylene) having a lower friction coefficient than the optical fiber 100 or coated its surface with a material having such a low friction coefficient.

The wiring roller 24 is rotatably supported by the supporting member 27. This wiring roller 24 is rotatable about an axis which is in parallel to the sheet 101 and orthogonal to the length of the groove portion 23, i.e. rotatable about an axis extending in the B directions. The wiring roller 24 is provided for pressing the optical fiber 100 guided by groove portion 23 onto the adhesive layer 101a so as to adhere the optical fiber 100 to the layer 101a.

An assist roller 25 is provided in proximity to the outlet-side end portion 23b, between the guide member 22 and the wiring roller 24. This assist roller 25 is rotatably supported by an assist roller supporting member 28 which extends from the axis of the supporting member 27. The assist roller 25 is, in the same manner as the wiring roller 24, rotatable about an axis extending in the B direction. The outer diameter of the assist roller is shorter than the outer diameter of the wiring roller 24. The assist roller 25 is provided for pressing the optical fiber 100 guided to the surface of the adhesive layer 101a by the groove portion 23 onto the adhesive layer 101a in order to temporally attach the optical fiber 100 on the adhesive layer 101a.

Between the fixture plate 26 and the bottom plate of the unit body 20, a compressed coil spring 30 (elastic member) is provided to be vertically extendable. This coil spring 30 biases the wiring roller 24 downward to push the roller onto the optical fiber 100, via the fixture plate 26 and the supporting member 27. Inside the coil spring 30 is inserted a vertically-extending shaft 31. This shaft 31 has a lower end portion fixed to the fixture plate 26. The upper end portion of the shaft 31 penetrates the bottom plate of the unit body 20 and retained by a linear bush 32 attached to the unit body 20. The shaft 31 is smoothly movable in the vertical directions by the linear bush 32. Furthermore, on account of the linear rail 33 attached to the unit body 20 and the slider 34 attached to the fixture plate 26, the fixture plate 26 is smoothly movable in the vertical directions with respect to the unit body 20. As such, the wiring roller 24 and the assist roller 25 are arranged to be stably movable in the vertical directions.

As described above, the wiring roller 24 is always biased by the coil spring 30 toward the sheet 101. For this reason, a friction force is generated between the optical fiber 100 and the wiring roller 24 as the wiring unit 2 moves in the wiring direction (indicated by the arrow A), with the result that the wiring roller 24 certainly rotates without sliding on the optical fiber 100, and hence the optical fiber 100 substantially line-contacts the adhesive layer 101a. Furthermore, also in cases where a part of the optical fiber 100 is wired to traverse another part of the optical fiber 100 which has already adhered to the adhesive layer 101a, the wiring roller 24 can certainly presses that part of the optical fiber 100 onto the adhesive layer 101a.

The tension adjusting unit 40 includes a tension roller 41, a supporting member 42, a coil spring 43, a shaft 44, and a linear bush 45.

The linear bush 45 is attached to the unit body 20 to retain the shaft 44 which extends in the direction of the arrow A. The leading end portion of the shaft 44 in the direction of the arrow A is fixed to the supporting member 42. The shaft 44 is smoothly movable by the linear bush 45 in both the direction of the arrow A and the direction opposite thereto.

The supporting member 42 rotatably supports the tension roller 41. The tension roller 41 is rotatable about an axis extending in the B direction. On the outer circumferential surface of the tension roller 41, an optical fiber 100 drawn from the bobbin 21 is wound.

Between the linear bush 45 and the supporting member 42, a compressed coil spring 43 is provided to be extendable in the direction of the arrow A, and a shaft 44 is inserted into this coil spring 43. The coil spring 43 biases the tension roller 41 via the supporting member 42 toward the optical fiber 100 (i.e. biases the supporting member 42 in the direction of the arrow A). Because of these arrangements, the tension roller 41 is smoothly moved in the direction of the arrow A or the direction opposite thereto by the biasing force of the coil spring 43 or the tension of the optical fiber 100.

As the tension of the optical fiber 100 is increased between the bobbin 21 and the wiring roller 24, the tension roller 41 moves in the direction opposite to the arrow A against the biasing force of the coil spring 43. On the other hand, when the tension of the optical fiber 100 is decreased Between the bobbin 21 and the wiring roller 24, the tension roller 41 moves in the direction of the arrow A by the biasing force of the coil spring 43. As such, when the tension of the optical fiber 100 is changed, the change in the tension is absorbed as the tension roller 41 moves to the position where the biasing force of the coil spring 43 is balanced against the tension of the optical fiber 100. This makes it possible to keep the tension of the optical fiber 100 more or less constant.

The control unit (not illustrated) is constituted by components such as a ROM, a RAM, and a CPU, and is connected to the horizontal movement mechanism 3 and the rotation mechanism 4. The control unit controls the operations of the horizontal movement mechanism 3 and the rotation mechanism 4 based on the information regarding the wiring pattern input from an unillustrated input unit. Since the wiring unit 2 is rotated about the axis C by the rotation mechanism 4, the outlet-side end portion 23b of the groove portion 23 functions as a reference position of the trajectory of the wiring unit. The control unit performs the control such that the wiring direction of the wiring unit matches the tangential direction of the wiring pattern.

Now, the operation of the optical fiber wiring apparatus 1 will be described. As the wiring unit 2 moves in the wiring direction, the optical fiber 100 is drawn from the bobbin 21 by the tension generated when the wiring roller 24 presses the optical fiber 100 onto the adhesive layer 101a, and the optical fiber 100 is guided to the surface of the adhesive layer 101a by the guide member 22. When the wiring unit 2 in this state is further moved, the optical fiber 100 guided by the guide member 22 is pressed onto the surface of the adhesive layer 101a by the assist roller 25 and temporally attached thereto, substantially at the position to which the optical fiber 100 is guided. Thereafter, the optical fiber 100 is pressed onto the surface of the adhesive layer 101a by the wiring roller 24 so as to be fully adhered to the surface. In this manner, the optical fiber wiring apparatus 1 wires the optical fiber 100 onto the sheet 101.

If the guide member 22 is not provided, it is necessary to form a groove portion to retain the optical fiber 100 on the outer circumferential surface of the wiring roller 24. In this case, when a wiring pattern having a bended part is formed, the edge portions (protruding portions) of the respective sides of the groove portion contact a part of the optical fiber 100 having already been wired on the adhesive layer 101a, with the result that the optical fiber 100 is deviated from the intended position and the fiber becomes easily detachable. In this regard, the present embodiment is arranged such that the guide member 22 guiding the optical fiber 100 and the wiring roller 24 pressing the optical fiber 100 onto the adhesive layer 101a are different components. For this reason, it is unnecessary to form a groove portion on the wiring roller 24 and the aforesaid problem that the protruding portions contact the optical fiber 100 having already been wired does not occur. Furthermore, since the guide member 22 is not provided for pressing the optical fiber 100 onto the adhesive layer 101a, it is possible as described above to provide a gap H which is twice or more wider than the diameter of the optical fiber 100, between the lower end of the guide member 22 and the surface of the adhesive layer 101a. As such, the guide member 22 and the wiring roller 24 do not contact a part of the optical fiber 100 having already been wired and cause the optical fiber 100 to be deviated from the intended position.

In addition to the above, the contact length between the optical fiber 100 and the groove portion 23 is relatively short as described above, whereas the optical fiber 100 substantially line-contacts the wiring roller 24. As a result, the friction resistance among the optical fiber 100 and the groove portion 23 and wiring roller 24 does not become excessively high, and the optical fiber 100 is not excessively tensioned.

In addition to the above, the optical fiber 100 guided by the groove portion 23 guided to the surface of the adhesive layer 101a is pressed onto the wiring roller 24 and adheres to the adhesive layer 101a, substantially at the position to which the optical fiber 100 is guided. This makes it possible to relatively precisely carry out the wiring by providing the outlet-side end portion 23b of the groove portion 23 on the axis C which is the reference position of the trajectory of the wiring unit 2.

In addition to the above, since the assist roller 25 is provided in proximity to the outlet-side end portion 23b of the groove portion 23, a deviation between the position to which the optical fiber 100 is guided to the groove portion 23 and the position where the optical fiber 100 is pressed onto the adhesive layer is small. In short, the wiring is precisely carried out.

In addition to the above, when a wiring pattern having a bended part is formed, optical fiber 100 is not twisted because, with the help of the rotation mechanism 4, the wiring unit 2 performs the wiring while rotating such that the wiring direction matches the tangential direction of the wiring pattern.

While the present invention has been described in conjunction with the preferred embodiment outlined above, it is evident that many alternatives, modifications and variations will be apparent to those skilled in the art within the scope of the invention as defined in the following claims.

For example, the embodiment above is arranged so that the assist roller 25 is provided between the guide member 22 and the wiring roller 24. In this regard, the assist roller 25 may not be provided. In such a case, the wiring roller 24 is preferably provided at a close proximity of the guide member 22.

In addition to the above, the embodiment above is arranged so that the outlet-side end portion 23b of the groove portion 23 is provided on the axis C of the axial component 13. The present invention, however, is not limited to this arrangement. For example, the shaft center of the assist roller 25 is provided on the axis C of the axial component 13. In other words, the axis C intersects the shaft center of the assist roller 25. This makes it possible to perform the wiring relatively precisely.

In addition to the above, the embodiment above is arranged so that the optical fiber 100 is provided on the sheet 101 on which the adhesive layer 101a has been formed, by the optical fiber wiring apparatus 1. In addition to this, the optical fiber wiring apparatus 1 of the embodiment above may also be used for providing an optical fiber 100 on a substrate on which an adhesive layer has been formed.

### REFERENCE NUMERALS

- 1: OPTICAL FIBER WIRING APPARATUS
- 2: WIRING UNIT
- 3: HORIZONTAL MOVEMENT MECHANISM
- 4: ROTATION MECHANISM
- 21: BOBBIN
- 22: GUIDE MEMBER
- 23: GROOVE PORTION
- 23a: OUTLET-SIDE END PORTION (WIRING UNIT SIDE END PORTION)
- 24: WIRING ROLLER
- 25: ASSIST ROLLER
- 30: COIL SPRING (ELASTIC MEMBER)
- 40: TENSION ADJUSTING UNIT
- 41: TENSION ROLLER
- 42: COIL SPRING (ELASTIC MEMBER)
- 100: OPTICAL FIBER
- 101: SHEET
- 101a: ADHESIVE LAYER

## Claims

1. An optical fiber wiring apparatus for providing an optical fiber on a sheet or a substrate having a surface on which an adhesive layer is formed, comprising:
a bobbin on which the optical fiber is wound;
a guide member having a groove portion by which the optical fiber drawn from the bobbin is guided to a surface of the adhesive layer; and
a wiring roller which is rotatable about an axis being in parallel to the sheet or the substrate and orthogonal to the length of the groove portion and presses the optical fiber guided by the groove portion onto the adhesive layer.

2. The optical fiber wiring apparatus according to claim 1, further comprising:
a rotation mechanism which rotates, about an axis orthogonal to the sheet or the substrate, a wiring unit including the bobbin, the guide member, and the wiring roller.

3. The optical fiber wiring apparatus according to claim 2, wherein,
an end portion of the groove portion on the wiring roller side is on the axis of the rotation mechanism.

4. The optical fiber wiring apparatus according to claim 3, further comprising:
an assist roller which is provided in proximity to the end portion, presses the optical fiber onto the adhesive layer, and has an outer diameter shorter than an outer diameter of the wiring roller.

5. The optical fiber wiring apparatus according to claim 2, further comprising:
an assist roller which is provided in proximity to an end portion of the groove portion on the wiring roller side and is on the axis of the rotation mechanism, presses the optical fiber onto the adhesive layer, and has an outer diameter shorter than an outer diameter of the wiring roller.

6. The optical fiber wiring apparatus according to any one of claims 1 to 5, wherein,
the bobbin is rotatable by a tension of the optical fiber which tension is generated when the optical fiber is pressed onto the adhesive layer by the wiring roller.

7. The optical fiber wiring apparatus according to any one of claims 1 to 6, further comprising:
a tension roller on which the optical fiber is wound; and
an elastic member which biases the tension roller toward the optical fiber.

8. The optical fiber wiring apparatus according to any one of claims 1 to 7, further comprising:
an elastic member which biases the wiring roller toward the optical fiber.
